# EUROPEAN PATENT APPLICATION

(11) **EP 4 806 835 A1**
(43) Date of publication of application: **16.09.2026**
(21) Application number: 26161945.6
(22) Date of filing: 03.03.2026
(51) Int. Cl.: B66F 9/075, B66F 9/065

(54) **STABILISERS FOR OPERATING MACHINES**

(30) Priority: 10.03.2025 IT 202500004868
(71) Applicant: Manitou Italia S.r.l., 41013 Castelfranco Emilia (Modena) (IT)
(72) Inventor: IOTTI, Marco, 42123 REGGIO EMILIA (IT)
(74) Representative: Gagliardelli, Fabrizio

(57) **Abstract**

Described are scissor stabilisers (2) for operating machines (1), comprising a supporting element (200) to which is connected a pair of stabilising arms (20) each equipped with a first segment (21) rotatable relative to the supporting element (200), a second segment (22) coupled in a slidable fashion to the first segment (21), so as to be able to extend or withdraw and a supporting foot (23), connected to a free end of the second segment (22) and equipped with a cut-out (24) configured in such a way as to allow a free end (210) of the first segment (21) of the other arm of the pair to pass through it without interference, during a reciprocal movement between the arms of the pair.

## Description

The present invention relates to stabilisers for operating machines.

More specifically, the invention relates to scissor stabilisers for self-propelled operating machines, such as telescopic handlers.

Telescopic handlers are known consisting of a vehicle equipped with a frame, or undercarriage, movable on wheels, a driver's cab and a telescopic operating boom.

An attachment s is mounted at the distal end of the boom for lifting or moving loads, such as, for example, a fork, a cage, a lateral transfer unit, a hoist, etc.

In order to lift and move a load to great heights and with a significant "outreach", that is, a significant distance from the frame, it is necessary to stabilise the vehicle.

In order to do this, apparatuses called stabilisers are used.

Stabilisers for telescopic handlers of the so-called "scissor stabilizers (or outriggers)" or "X type stabilizers" are known, consisting of two stabiliser units, fixed to the undercarriage at the front and rear.

Each stabiliser unit comprises a pair of rotatable and telescopically extendable arms, which move in parallel and adjacent planes.

Each arm consists of a first segment hinged to the undercarriage and movable for lifting and lowering, and a second segment slid into the first, at the end of which a foot for supporting on the ground is mounted.

In practice, the stabilising arms are positioned crossed relative to each other and, during the lifting, move like a pair of scissors.

The stabilisers move from an extended operating configuration, in which they support the entire vehicle, to a retracted configuration of rest.

In the rest configuration, the stabilisers have an overall transversal size allowed by the road traffic regulations. In detail, this overall lateral dimension can be equal to or lower than that of the frame, or undercarriage, of the machine.

In the operating configuration, the stabilisers rest on the ground on their feet, thereby forming a quadrilateral of support.

Once the load movement operations have been completed, the stabilisers are returned to the non-operating configuration, where they have a minimum overall size.

In recent years, machines have been produced with ever greater load capacities and increasing maximum lengths of the operating boom. This has resulted in the adaptation of the stabilisers so that they offer a maximum quadrilateral support which is sufficiently wide to stabilise the new machines in all the operating conditions.

In order to obtain a larger operating quadrilateral, it is necessary to lengthen the stabilisers, but the length of the first segment is limited by the maximum lateral overall size allowed by road traffic regulations.

From these circumstances it follows that, during the stage in which the stabilisers are moved from the extended configuration to the rest configuration, there are specific reciprocal positions between the arms of each pair in which it is possible for the foot of one to interfere with the end of the first segment of the other.

In order to prevent a priori interference conditions from occurring, automatic re-entry systems for the stabilisers have been developed, in which a suitably programmed control unit automatically commands the stabilisers in a predetermined folding sequence where the arms perform raising and retracting movements selected so as to avoid a priori interference between the foot of one arm of the pair and the end of the first segment of the other arm.

Such a system is protected by European Patent No. EP3424869 of the Applicant.

Such a system operates very well.

However, in known systems, the potential risk of interference is avoided with certainty at the price of a strong rigidity in the use of the stabilisers because their safe folding is only obtained by taking away from the operator the freedom to choose how to move the arms.

In this context, the technical task underlying the present invention is to propose stabilisers for self-propelled operating machines that overcomes the limits of the prior art.

The specified technical task is achieved by the stabilisers manufactured according to the accompanying claims and the embodiments described.

Further features and advantages of the present invention are more apparent in the non-limiting description of a preferred embodiment of the stabilisers illustrated in the accompanying drawings, in which:
- Figure 1 is an axonometric view of an operating machine fitted with the stabilisers according to the invention;
- Figures 2 - 4 are different views of a detail of the stabilisers of Figure 1, shown in the rest configuration;
- Figure 5 is an axonometric view of the machine of Figure 1, where the stabilisers are shown in an intermediate configuration between the rest and stabilised configurations.

With reference to the accompanying drawings, reference numeral 1 denotes an operating machine comprising the stabilisers 2 according to the invention.

To be precise, the proposed stabilisers 2 have been specially designed to be implemented on a vehicle 1 consisting of a self-propelled operating machine, such as a telehandler or an aerial platform, which can be of the rotary or fixed type.

The machine 1 shown in the drawings is a telescopic handler 1 (or telehandler) of the so-called "rotary" type, provided with an undercarriage 11, movable on wheels, on which is fixed a rotary platform 12 which includes the driver's cab 13 and to which is hinged a telescopic operating boom 10. The platform 12 can be moved by a hydraulically operated slew-ring or other actuator having the same function.

The boom 10 is provided, at its distal end, with a removable loading attachment 14. The term "attachment" means both a device for engaging a load, such as a fork, an arm equipped with hooks, a winch, a gripper, etc. and an device for lifting persons and, if necessary, also a load, such as a load cage (or basket).

One of the characteristics of telescopic handlers, unlike aerial platforms, is the possibility of changing the attachment 14 depending on the use.

Some of these attachments 14 have movable parts driven by respective actuators. For example, the forks can have mobile prongs, the winches have a motor, often of the hydraulic type, to recover the cable, some arms have extendable hooks, there are grippers that, in addition to tightening the jaws, are able to swing frontally or rotate about themselves.

Still more in detail, the boom 10 may have, at its end, a coupling device, also of the type normally in use in the machines manufactured by the Applicant, which allows the replacement of the attachment and the connection thereof to the hydraulic and electronic apparatuses of the machine 1.

According to certain embodiments, in place of the wheels 15 there may be tracks or other similar means.

The boom 10 is articulated so as to oscillate vertically, under the actuation of at least one hydraulic cylinder or other actuator, between a lower position, substantially horizontal, and an upper position wherein the boom 10 is close to the vertical. The boom 10 is extensible and retractable and, more precisely, comprises a plurality of segments inserted one in the other, coaxial with one another and designed to translate along the axial direction. The elongation and retraction of the boom 10 are also produced by one or more hydraulic cylinders, or other actuators, or also by a telescopic cylinder (or other actuator with several stages).

The machine 1 also comprises an electro-hydraulic distributor to which are individually connected the hydraulic actuators used in the machine 1. The distributor is powered by a pump driven by the engage (or motor). The pump can be a fixed displacement or variable displacement type. However, embodiments of the invention are not excluded in which one or more of the above-mentioned actuators are electrical rather than hydraulic and therefore some actuators are hydraulic, and some are electrical.

Neither can it be ruled out that the invention may also be used with an operating machine other than the rotary telescopic handler shown in the drawings.

In particular, the proposed machine 1 could also be a "fixed" type telescopic handler, that is to say, without the rotary platform, wherein the cab and the arm are mounted directly on the frame, or "undercarriage", which rests on the ground on the wheels.

The propulsion can be achieved by means of an internal combustion engine, which drives both the transmission and the pump and is placed in the frame or "undercarriage" 11. It is also possible to provide for the use of one or more electric motors, for example an electric motor to drive the transmission and another to drive the pump, which could both be placed in the undercarriage or be located elsewhere.

The machine 1 includes means for the manual movement of the apparatuses of the machine and, in particular, the stabilisers 2.

The movement means are connected to a control unit which is designed to transmit control signals to the distributor which consequently commands the actuators, in such a way that they operate the boom 10, the stabilisers 2, the platform 12, the motor(s), if necessary the pump, and the mobile apparatuses of the machine 1, according to the commands issued by the operator who sits in the cab 13.

The manual movement means are preferably included in cab 13 of machine 1, so as to be available to the operator and may include manual control elements such as joysticks, pedals, levers, push-button panels, knobs, touchscreens, etc.... When the operator acts on the control elements, a control unit generates control signals that are received by the distributor, which then regulates the operation of the machine's hydraulic actuators accordingly, for example to move the boom 10, the stabilisers 2 or the accessory 14 etc.... The electric actuators, if present, directly receive the control signal. The manual controls can also be operated by a remote control.

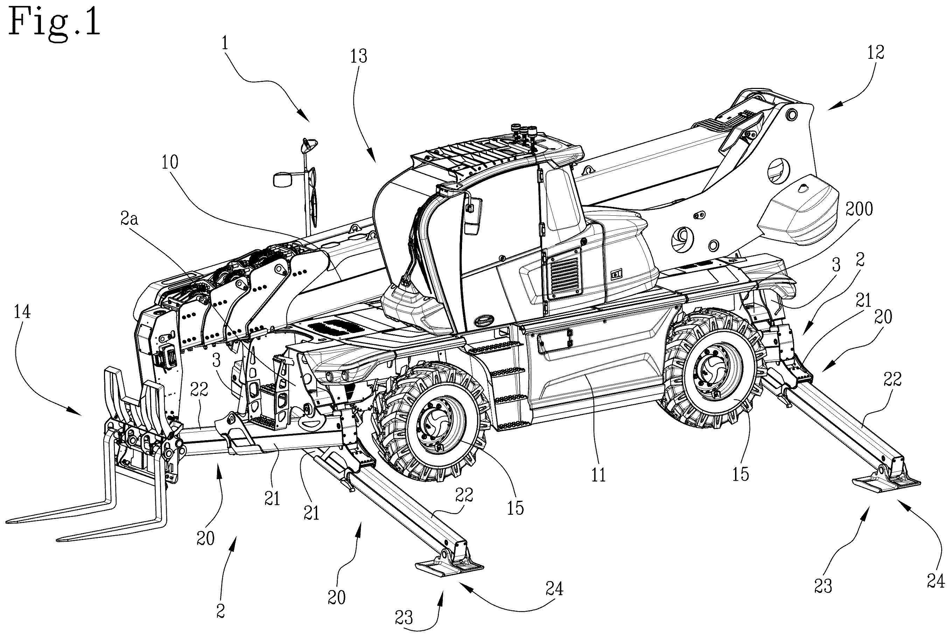

The stabilisers 2 (or "outriggers") according to the invention are of the so-called "scissor" or "X" type, and include two pairs of telescopic arms 20, for example with a single sliding member, located one at the front and one at the rear of the vehicle 1, in the proximity of the wheels 15 (see Figure 1).

To be precise, the proposed stabilisers 2 include two stabilising units, located at the front and the rear of the undercarriage 11, each comprising a supporting structure 200, fixed to or incorporated in the undercarriage 11 of the machine 1, to which the arms 20 of a pair are individually hinged in a crossed configuration so that they can move in counter-rotation, like a pair of scissors.

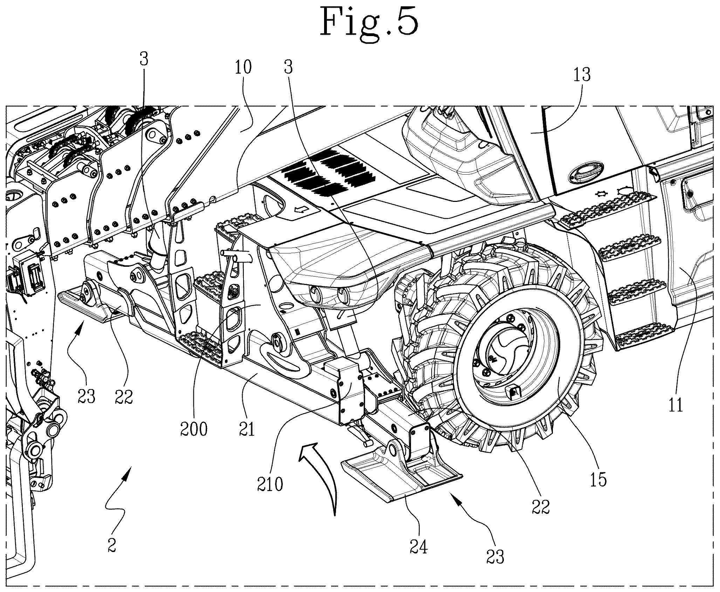

Rather than the structure 200 with vertically shaped flanges shown in figures 1 and 5, other supporting elements suitable for the purpose can also be used.

In more detail, the two arms 20 connected to the same supporting structure 200 are mounted opposite each other, so as to be able to move in respective movement planes, parallel to each other and side by side, which, in use, are vertical when the machine 1 is on horizontal ground.

The proposed stabilisers 2 are suitable for passing from multiple operating configurations, wherein they stabilise the machine 1, sometimes raising the wheels 15 above the ground, to a rest configuration, in which the wheels 15 are always placed the ground, and vice versa.

In practice, the stabilising arms 20 are movable between a raised position, wherein they are distanced from the ground and in particular freely allow the driving of the vehicle 1, and at least one lowered operating position (shown in Figure 1), wherein they are rested on the ground to allow the stabilisation. The arms 20 are supported on the ground by means of respective feet 23, which will be described in detail below.

Once the respective foot 23 is in place, the arms 20 can continue the movement, lifting the vehicle 1 until the desired stabilisation condition is reached.

In general, a plurality of stabilising configuration positions is possible, depending on the specific conditions in which the vehicle 1 is to operate, with particular reference to the type of ground on which the machine 1 must stabilise.

In effect, depending on the slope or the shape of the ground on which the vehicle 1 stabilises, the arms 20 may rest on the ground with variable inclinations and lengths.

Preferably, in the raised rest configuration, the overall lateral size of the stabilisers 2 is equal to or lower than that of the carriage 11 of the machine 1 on which they are mounted.

As shown in the accompanying drawings, the arms 20 include a first segment 21, or "sleeve", which is hollow and in which is contained in a slidable fashion a second segment 22, or "sliding member", which is equipped, at the distal end, with a supporting element, that is, the above-mentioned foot 23.

In practice, each arm 20 extends between a free end 210 of the first segment 21 and the supporting foot 23 connected to the second segment 22.

In practice, each segment 21, 22 may comprise a rectilinear beam, which is hollow and has a quadrangular cross-section.

In this case, the beam of the second segment 22 is inserted with possibility of sliding into the beam of the first segment 21, which will obviously have a larger cross-section.

For this reason, in the rest configuration, the arms 20 are raised and the second segments 22 are inserted into the first segments 21, with the feet 23 remaining at the sides.

In the various operating positions, the arms 20 are inclined towards the ground, the feet 23 rest on the ground and the second segments 22 can more or less be extracted from the first segments 21.

The invention comprises first movement means 3 suitable for individually rotating the arms 20 between a completely raised position and lowered operating positions.

Preferably, the first movement means comprise a hydraulic cylinder 3 for each arm 20.

According to a possible embodiment, the first segment 21 of each arm 20 is connected to the supporting structure 200 by a first hinge; moreover, at the end of the movement of the arm 20 about the first hinge, an hydraulic cylinder 3 is provided, the thrust of which is used for lifting the wheels 15 above the ground during the stabilising step.

Each cylinder 3 is connected by a second hinge to the supporting structure 200 and, through a third hinge, to the first segment of the respective arm 20.

The first and the third hinge are positioned in two distinct points of the length of the first segment 21, preferably at the upper side, the first being further inside, that is, closer to the proximal end of the first segment 21, and the third further outside, that is, closer to the distal end.

Note however that the configuration of the stabilising arms 20, and in particular the location of the hinges, may also be different. For example, the configuration of the stabilisers may be like that of the stabilisers described in Patent No. EP3835250 of the Applicant.

The feet 23 are also preferably hinged to the free end of the respective second segment 22.

In practice, the hydraulic cylinders 3 are actuated with a pushing action to move the arms 20 to the ground and raise the vehicle 1, whilst they are actuated with a retraction action when the vehicle 1 is returned to rest on the wheels 15 and the arms 20 are raised in the rest position.

The invention includes second movement means, for example comprising hydraulic cylinders (not shown), designed to move individually the second segments 22 between a completely closed position and extended positions. In practice, for the purpose of extending the sliding member 22 to the outside of the sleeve 21, use is made of a hydraulic cylinder, inserted between the sliding member 22 and the sleeve 21 and connected to each other at opposite ends.

The supporting foot 23 of each arm 20 of a pair has an extension such as to occupy at least in part both movement planes in which the stabiliser arms move (see Figures 1 and 5). In fact, the first and second segments 21, 22 of each arm 20 of the pair are dimensioned to be included in the respective movement plane while the foot 23 also extends in the other plane. In other words, each foot 23 has a shape and a dimension such that it extends in both planes of movement. In this way, the supporting foot 23 provides a wide support base that allows the machine 1 to be effectively stabilised.

According to an important aspect of the invention, the supporting foot 23 connected to the free end of the second segment 22 of an arm 20 is provided with a cut-out 24 which is configured in such a way as to allow a free end 210 of the first segment 21 of the other arm 20 of the pair to pass through it, without interference, during a reciprocal movement between the arms 20 of the pair.

The term "cut-out" means a missing part, that is, an absent part of the foot 23, for example machined by removal or by suitable moulding; that is, a through-hole not enclosed by a relative closed perimeter but open also on one side.

In practice, when the free end 210 of the first segment 21 of one arm 20 and the foot 23 at the other arm 20 of the pair move reciprocally so as to be in the trajectory of the other, the free end 210 of the first segment freely passes through the cut-out of the foot 23, thereby avoiding contact between the foot 23 and the first segment 21.

The cut-out 24 is dimensioned so as to allow the passage of the free end 21 of the first segment 21.

The situation in which foot 23 of one arm and the free end 210 of the first segment of the other arm meet without interference can occur when, starting from a stabilising position, the arms 20 of the pair are raised and retracted, under the operator's control, in order to bring them to the raised rest position.

The cut-out 24 of the foot 23 of one arm is at least partially, and preferably mostly or substantially entirely, arranged in the plane of movement which contains the two segments 21 and 22 of the other arm.

The cut-out 24 is preferably obtained at a perimeter edge of the supporting foot 23, which for example may have a substantially quadrangular shape. In the case shown, the feet 23 are rectangular with the length arranged parallel to their arms 20.

The cut-out 24 is preferably arranged at the outermost side of foot 23 that is in use.

Each foot 23 may comprise a central flat portion 230, the lower surface of which is intended for contact with the ground, and which at two opposite sides may extend into respective inclined edge portions 231, 232 relative to that central flat portion 230. In this case, the cut-out 24 may be formed in one of the edge portions 231.

In this way, the cut-out 24 does not reduce the extension of the portion 230 of the foot that remains in contact with the ground, which reduces the risk of damage to the supporting surface on which the machine 1 stabilises.

The opposed inclined edge portions 231, 232 can be joined by a central rib at the internal face of the foot 23 and flank ribs or sideboard can be provided at the sides of the foot 23 which joins the opposed inclined edge portions 231, 232, so as to define, at the internal face of the foot 23 two concavities shaped as "trays". The internal face of the foot 23 is obviously the opposite of the face which is destined to touch the ground.

According to the embodiment shown in the drawings, the cut-out 24 is made on the outermost side near, or at, one of the longitudinal ends of the inclined edge portion 231.

The cut-out 24 can be defined by a C-shaped or parenthesis-shaped profile, as shown in the accompanying drawings.

In practice, the perimeter of the foot 23 may be quadrangular except for a cut-out 24, preferably C-shaped or parenthesis-shaped, which defines a protrusion on one or both of its sides. Thus, the side of the foot 23 that includes the cut-out 24 has an edge whose linearity is interrupted by the cut-out that defines it.

According to the preferred embodiment of the invention, the free end 210 of the first segment of each arm is shaped so as to facilitate the passage into the cut-out of the foot of the other arm.

In detail, the profile of the free end 210 of the first segment 21 may include a stretch 212 cut-out relative to the rest of the profile, at which the length of the arm is lower than that of the rest of the profile.

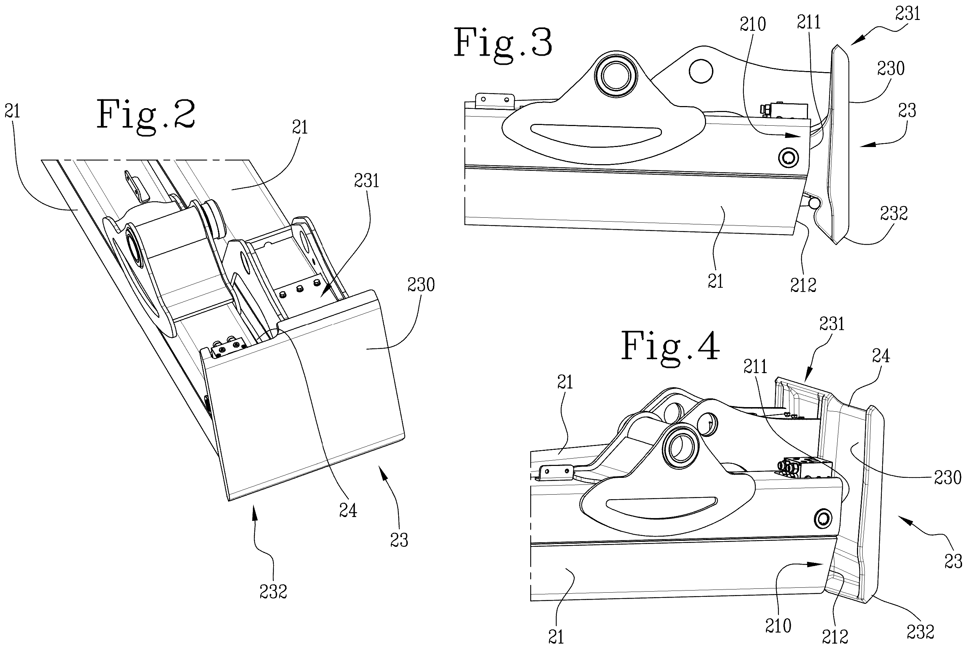

In detail, the profile of the free end of the first segment can include a first stretch, preferably the upper stretch 211, and a second stretch 212 cut-out relative to the first stretch (see Figures 3 and 4).

For example, the first stretch 211, preferably arranged above, may be straight and substantially perpendicular to the length of the first stretch, while the second stretch 212, preferably arranged below, may or may not be straight and may be inclined with respect to the first stretch. It is not excluded that the two stretches 211, 212 may also have a curvilinear trend. Preferably, the second stretch 212 extends to at least half of the profile of the free end 210. Even more preferably, the extent of the second stretch 212 is greater than that of the first stretch 211.

Preferably, the inclination between the two stretches 211 and 212 is approximately 12°. The inclination can also be between 10° and 20°.

Thanks to the configuration of the proposed stabilisers 2, it is possible to obtain very large maximum supporting quadrilaterals, respecting the maximum overall lateral size allowed by road traffic regulations, avoiding the risk of interference but without the need to provide the machine 1 with automatic retraction systems for the stabilisers 2.

## Claims

1. Scissor stabilisers (2) for operating machines (1), comprising at least one supporting element (200) to which is connected at least one pair of stabilising arms (20) each equipped with a first segment (21) rotatable relative to the supporting element (200), a second segment (22) coupled in a slidable fashion to the first segment (21), so as to be able to extend or withdraw and a supporting foot (23), connected to a free end of the second segment (22) and equipped with a cut-out (24) configured in such a way as to allow a free end (210) of the first segment (21) of the other arm of the pair to pass through it without interference, during a reciprocal movement between the arms of the pair.

2. The stabilisers (2) according to the preceding claim, wherein each supporting foot (23) comprises a central flat portion (230) and at least one edge portion (231, 232) inclined relative to the central flat portion (230), said cut-out (24) being made in said edge portion.

3. The stabilisers (2) according to the preceding claim, wherein the cut-out (24) is made close to one of the longitudinal ends of the inclined edge portion (231).

4. The stabilisers (2) according to any preceding claim, wherein the free end (210) of the first segment of each stabilising arm is shaped in such a way as to favour the passage without interference through the cut-out (24) made in the supporting foot (23) of the other arm.

5. The stabilisers (2) according to the preceding claim, wherein the profile of the free end (210) of the first segment (21) may include a stretch (212) cut-out relative to the rest of the profile.

6. The stabilisers (2) according to any preceding claim, wherein the first and the second segment (21, 22) of each arm of the pair are contained and move in a respective movement plane, the two movement planes being parallel to each other and alongside each other, wherein the supporting foot (23) of each arm extends in both the movement planes, the cut-out (24) of the foot of an arm being at least partly positioned in the movement plane of the two segments of the other arm.

7. An operating machine comprising stabilisers (2) according to any preceding claim and manual control means designed to adjust the movement of the stabilising arms (20).
